# EUROPEAN PATENT APPLICATION

(11) **EP 1 753 065 A1**
(43) Date of publication of application: **14.02.2007**
(21) Application number: 05734635.5
(22) Date of filing: 19.04.2005
(51) Int. Cl.: H01M 8/24, H01M 8/10

(54) **FASTENING TOOL FOR FUEL CELL**

(30) Priority: 26.05.2004 JP 2004156327
(71) Applicant: Advanex Inc., Tokyo 114-8581 (JP)
(72) Inventor: KOBAYASHI, Masahiro, c/o ADVANEX INC., Tokyo 114-8581 (JP); MIZUOCHI, Akira, c/o ADVANEX INC., Tokyo 114-8581 (JP); CHIKASHIGE, Kiyoshi, c/o ADVANEX INC., Tokyo 114-8581 (JP); KUBO, Hirotaka, c/o ADVANEX INC., Tokyo 114-8581 (JP)
(74) Representative: Poulin, Gérard
(86) International application number: PCT/JP2005/007441
(87) International publication number: WO 2005/117194

(57) **Abstract**

A fastening tool for a fuel cell has socket members individually engaging with fastening members for simultaneously fastening a large number of unit cells layered on each other, a rotor provided on each socket member, torque input device for inputting torque for rotating each rotor, a torque transmission mechanism for dividingly transmitting the torque inputted from the torque input device to each rotor to uniformly rotate each rotor, and clutch mechanisms individually arranged between the socket members and the rotors. The clutch mechanisms rotate the socket members with the rotors when tightening torque to rotate the rotor is equal to or less than a predetermined value, and cause the rotors to run idle relative to the socket members when the tightening torque is greater than the predetermined value.

## Description

### TECHNICAL FIELD

This invention relates to a fastening tool for a fuel cell for simultaneously fastening a large number of stacked unit fuel cells using a plurality of fastening members.
Priority is claimed on Japanese Patent Application No. 2004-156327, filed May 26, 2004, the contents of which are incorporated herein by reference.

### BACKGROUND ART OF THE INVENTION

Conventionally, a polymer electrolyte fuel cell (PEFC) is known as one type of fuel cell. This polymer electric fuel cell (referred to below on occasion simply as a "fuel cell") is formed by stacking a large number of planar unit fuel cells (i.e., unit cells). In this type of fuel cell, in order for them to be operated while a high level of performance is maintained, it is necessary to fasten the stacked fuel cells in the stacking direction thereof so as to impart a predetermined surface pressure thereto. Moreover, in the aforementioned fuel cells, because there is expansion and contraction particularly in the stacking direction that is caused by heat generation and heat discharge during operations, it is common for a predetermined fastening force to be applied in conjunction with this expansion and contraction (see, for example, Japanese Patent Granted Application Publication No. H07-54713).

### DISCLOSURE OF THE INVENTION

### PROBLEMS TO BE SOLVED BY THE INVENTION

When fastening the stacked unit cells using a plurality of fastening members, in order to impart surface pressure evenly to the unit cells and maintain a uniform fastening force in each fastening tool, it is preferable for the fastening operation of each fastening tool to be performed with the stacked unit cells in a fastened state using separate pressing machines or the like. However, this type of operation has the problem that an increased number of steps are needed to assemble the fuel cell.
The present invention therefore provides a fastening tool for a fuel cell that enables the number of steps required to assemble a fuel cell to be decreased, while maintaining a uniform fastening force in a plurality of fastening members.

### Means for solving the problem

The present invention is a fastening tool for a fuel cell that is used to simultaneously fasten a large number of stacked unit cells using a plurality of fastening members. This fastening tool for a fuel cell includes: a plurality of socket members that are engaged so as to be able to transmit torque individually to a plurality of fastening tools for simultaneously fastening a large number of stacked unit cells; rotors that are provided individually on each of the socket members; a torque input device that inputs torque for rotating the respective rotors; a torque transmission mechanism that divides torque that is input from the torque input device and transmits it to the respective rotors so as to cause each rotor to rotate uniformly; and clutch mechanisms that are individually provided between the respective socket members and rotors and cause the socket members to rotate together with the rotors when a tightening torque that causes the rotors to rotate is equal to or less than a predetermined value, and cause the rotors to rotate idly relative to the socket members when the tightening torque is greater than a predetermined value.

According to this structure, when a fuel cell is being assembled, after the respective fastening members have been temporarily joined to the stacked unit cells, the respective fastening members are simultaneously tightened.
At this time, even if there are differences in the temporary joining of the respective fastening members, if the tightening torque in each fastening member (i.e., the tightening torque) reaches a predetermined value, in other words, if the fastening force of the fastening tools reaches a predetermined value, then the clutch mechanisms allows the rotors to rotate idly relative to the socket members. Namely, simply by inputting torque until all of the rotors are rotating idly, any unevenness in the temporary joining state of the respective fastening members is absorbed, and the respective fastening members can be simultaneously and uniformly tightened. Accordingly, surface pressure can be applied evenly to the unit cells while a uniform fastening force is maintained in each fastening member.

### EFFECTS OF THE INVENTION

According to the present invention, when assembling a fuel cell, an operation to fasten stacked unit cells using separate pressing machines or the like is unnecessary, and it is possible to apply surface pressure evenly to the unit cells while a uniform fastening force is maintained in each fastening member. In addition, because any unevenness in the temporary joining state of the respective fastening tools is absorbed and they can be simultaneously and uniformly tightened, the number of steps needed to assemble the fuel cell can be greatly reduced.

### BRIEF DESCRIPTION OF THE DRAWINGS

[FIG. 1] FIG. 1 is a perspective view showing a fuel cell and a fastening tool in an embodiment of this invention.
[FIG. 2] FIG. 2 is a top view showing the fastening tool.
[FIG. 3] FIG. 3 is a cross-sectional view taken along the line A-A in FIG. 2.
[FIG. 4] FIG. 4 is an exploded explanatory view showing a torque wrench of the above fastening tool.

### DESCRIPTION OF THE REFERENCE NUMERALS

- 2: Unit cell
- 5: Fastening member
- 10: Fastening tool for a fuel cell
- 11: Frame
- 12: Handle (Torque input device)
- 15: Torque transmission mechanism
- 21: Input rotor (i.e., rotor)
- 22: Socket member
- 23: Clutch mechanism
- 31,32: Washers
- 33, 34: Disc springs
- 35: Nut

### PREFERRED EMBODIMENT FOR IMPLEMENTING THE INVENTION

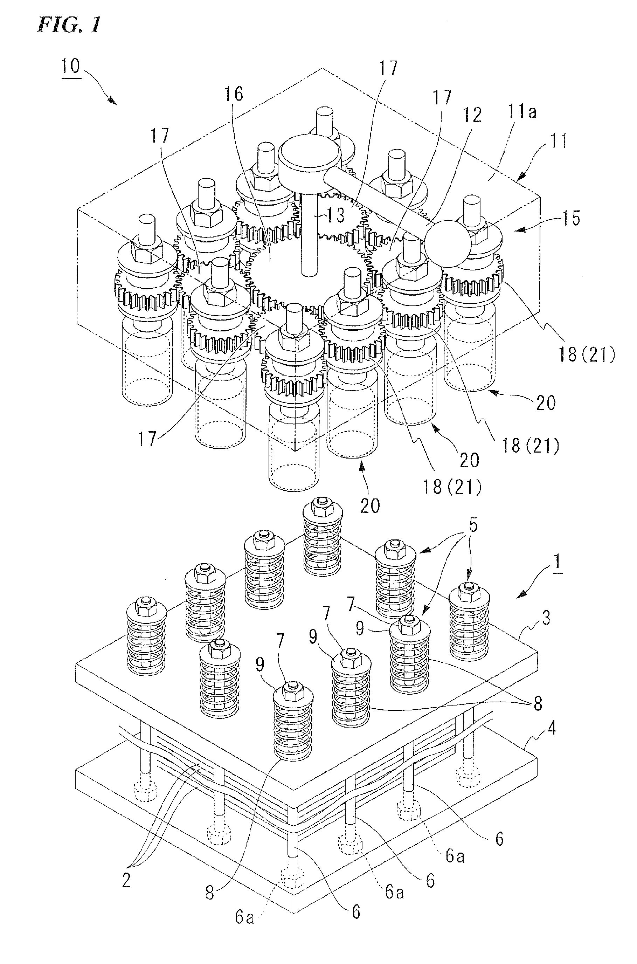

An embodiment of the present invention will now be described with reference made to the drawings.
A fastening tool for a fuel cell indicated by the symbol 10 in FIG. 1 is formed so that, when a fuel cell 1 is being assembled, a large number of stacked unit cells 2 are fastened in a stacking direction using a plurality of fastening members 5.

The fuel cell 1 is a known polymer electrolyte fuel cell 1 (PEFC) that is formed by stacking a large number of rectangular plate-shaped unit cells (i.e., unit cells) 2 and then sandwiching these between a pair of fastening plates 3 and 4. A plurality of fastening members 5 are provided in parallel rows around the fuel cell 1. Both end portions of each fastening member 5 are connected to outer peripheral portions of the respective fastening plates 3 and 4 and the fastening members 5 generate fastening force that compresses the space between the respective fastening plates 3 and 4.

Four of the respective fastening members 5 are aligned substantially equidistantly along the long sides of the unit cells 2 and three are aligned substantially equidistantly along the short sides of the unit cells 2, so that a total of ten fastening members 5 are provided for one fuel cell 1. The fastening force of each fastening member 5 is imparted via the two fastening plates 3 and 4 to the respective unit cells 2 so that uniform surface pressure is generated in the respective unit cells 2.

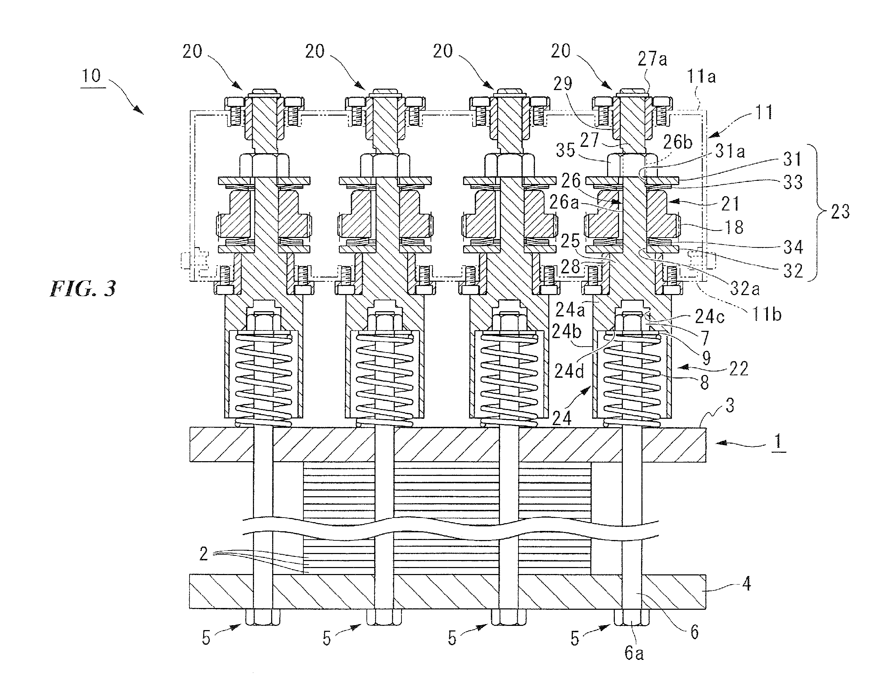

A description will now be given with reference made to FIG. 3. Each fastening member 5 is principally formed by a stud bolt 6 that penetrates the respective fastening plates 3 and 4 in the stacking direction of the unit cells 2 and by a nut 7 that is threaded onto the stud bolt 6. By employing a structure in which a compression coil spring 8 is interposed between the nut 7 and the fastening plate 3, the unit cells 2 are resiliently fastened. Hereinafter, the stacking direction of the unit cells 2 is taken as a vertical direction with the head portion 6a side (i.e., the fastening plate 4 side) of the stud bolts 6 taken as the downward side and the nut 7 side (i.e., the fastening plate 3 side) taken as the upward side.

Shaft portions of the stud bolts 6 penetrate the fastening plates 3 and 4 in a vertical direction from beneath the fastening plate 4, which is on the bottom side, towards the top of the fastening plate 3, which is on the top side. The nut 7 is threaded onto the portion of the stud bolts 6 that protrudes upwards from the top side fastening plate 3, and the compression coil springs 8 are interposed between the nut 7 and the fastening plate 3.

A bottom end of the compression coil springs 8 is placed against a top surface of the fastening plate 3, while a top surface thereof is placed via a flat washer 9 against a bottom surface of the nut 7. As a result of the resilient force of this compression coil spring 8 in its direction of expansion, the top side fastening plate 3 is urged downwards and the bottom side fastening plate 4 is urged upwards via the nut 7 and the stud bolt 6. Accordingly, the two fastening plates 3 and 4 fasten the unit cells 2 between them.

Namely, if the nut 7 is loosened, the resilient force of the compression coil spring 8 is reduced so that the fastening force of the fastening member 5 is reduced. If the nut 7 is tightened, the resilient force of the compression coil spring 8 is increased so that the fastening force of the fastening member 5 is increased. Here, the torque that is required to tighten the nut 7 (i.e., the tightening torque) increases or decreases in proportion to the increase or decrease of the resilient force of the compression coil spring 8. In other words, the tightening torque increases or decreases in accordance with the reaction force received from the unit cells 2 that have been fastened by the fastening members 5.

The fastening tool 10 receives an input of torque from a single handle (i.e., torque input device) 12 and by simultaneously operating a plurality of torque wrenches 20 that are provided for the respective fastening members 5, this torque is divided between the respective fastening members 5 and the nuts 7 of the respective fastening members 5 are tightened with a predetermined tightening torque.

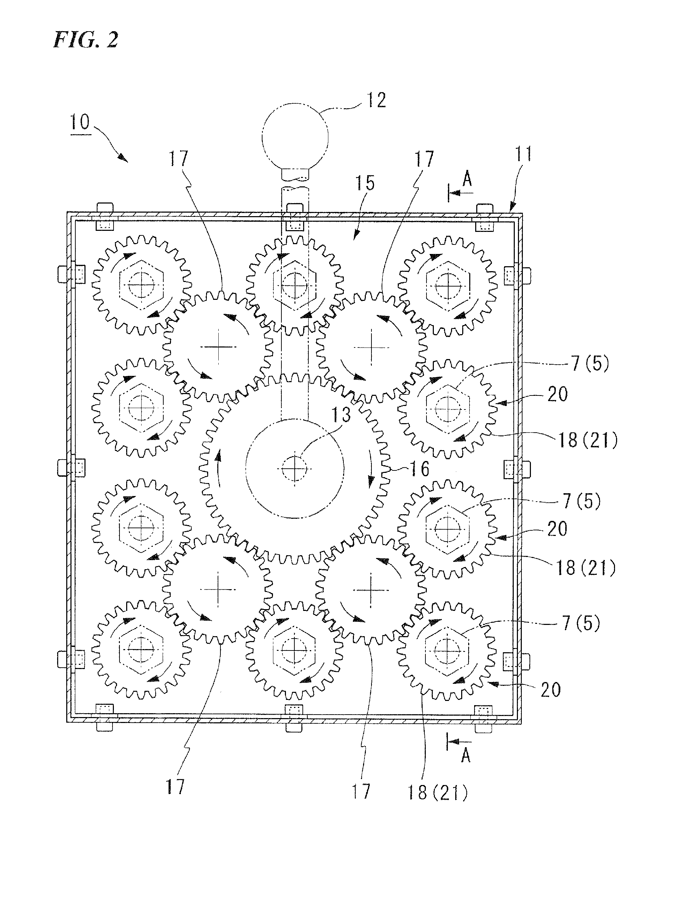

As is shown in FIGS. 1 and 2, the fastening tool 10 is provided with a box-shaped frame 11 that, in a top view, presents a flat, rectangular parallelepiped-shaped external appearance in a vertical direction substantially superimposed on the respective fastening plates 3 and 4. A torque input shaft 13 having an axis of rotation that runs in the vertical direction is placed in a center portion of the frame 11. The plurality of torque wrenches 20 that also have an axis of rotation running in the vertical direction are placed at outer peripheral portions of the frame 11.

The torque input shaft 13 is supported so as to be able to rotate freely in the frame 11. A top end portion of the torque input shaft 13 protrudes upward from a top wall portion 11a of the frame 11 and is connected to a base portion of the handle 12. Namely, by operating the handle 12, the desired torque can be input into the torque input shaft 13.
The torque that is input into the input shaft 13 is divided via a torque transmission mechanism 15 that is formed by a plurality of gears. The divided torque is transmitted to input rotors (i.e., rotors) 21 of the respective torque wrenches 20.

The torque transmission mechanism 15 has an input gear 16 that is coaxially fixed to the torque input shaft 13, intermediate gears 17 that are located in four directions around the input gear 16 and mesh with the input gear 16, and output gears 18 that mesh with the adjacent intermediate gear 17. The output gears 18 are formed integrally with the input rotors 21 of the respective torque wrenches 20. The input gear 16 is formed larger than the intermediate gears 17 and the output gears 18, and increases the angular velocity of the respective torque wrenches 20 relative to the angular velocity of the handle 12.

The respective intermediate gears 17 are supported so as to be freely rotatable in the frame 11 and are each placed so as to mesh with a total of three output gears 18, namely, those of the torque wrench 20 positioned in the corner of the frame 11 and of the two torque wrenches 20 positioned adjacent to this. Accordingly, the center output gear 18 from among the three torque wrenches 20 positioned along the short side of the unit cells 2 meshes with two intermediate gears 17.

If torque is input in a rightward direction (as seen in top view) into the torque input shaft 13 using the handle 12, then the same rightward torque is transmitted via the input gear 16, the respective intermediate gears 17, and the respective output gears 18 to the input rotors 21 of the respective torque wrenches 20 so that the respective input rotors 21 are rotated in the same manner. Namely, the respective torque wrenches 20 operate in conjunction with the rotation of the torque input shaft 13.

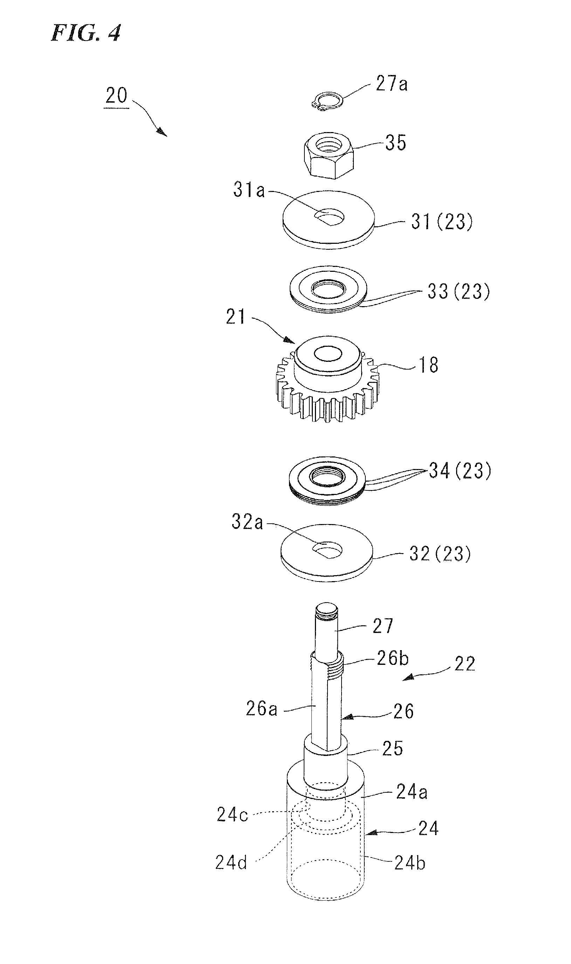

As is shown in FIGS. 3 and 4, each torque wrench 20 has a socket member 22 that engages with the nut 7 of the corresponding fastening member 5 such that it can transmit torque thereto, the input rotor 21, and a clutch mechanism 23 that is interposed between the input rotor 21 and the socket member 22 and controls the transmission of torque between them.

The socket member 22 is supported so as to be able to rotate freely in the frame 11, and is made up of a socket body 24 that is provided so as to protrude downwards from a bottom wall portion 11b of the frame 11, a bottom side supporting portion 25 that is continuous from a top end of the socket body 24, an input shaft portion 26 that is continuous from a top end of the bottom side supporting portion 25, and a top side supporting portion 27 that is continuous from a top end of the input shaft portion 26 that are all formed integrally with each other.

The socket body 24 is formed as a circular cylinder having one closed end that opens in a downwards direction, and has a comparatively thick bottom wall portion 24a and a comparatively thin circumferential wall portion 24b. The axis of rotation of the socket body 24 matches the axis of rotation of the socket member 22. If the socket body 24 is fitted onto the fastening member 5 so as to cover the compression coil spring 8 of the fastening member 5, then the nut 7 fits inside a concave portion 24c that is formed in a center of a bottom surface of the bottom wall portion 24a. Note that a guide surface 24d that guides the nut 7 when it is being fitted is formed on a peripheral edge on the aperture side of the concave portion 24c.

The bottom side supporting portion 25 is formed coaxially with the socket body 24 as a small diameter circular column. The bottom side supporting portion 25 is supported such that it can rotate freely on the bottom wall portion 11b of the frame 11 via a bearing 28 that is fitted onto the outer circumferential surface thereof.

The input shaft portion 26 is shaped as a rod that extends from a top end of the bottom side supporting portion 25 to the vicinity of the top wall portion 11a of the frame 11, and is formed having a substantially D-shaped cross section by being provided with a flat beveled portion 26a on one side of a circular column that is coaxial with the socket member 22. A male threaded portion 26b having thread ridges on its outer circumferential portion is formed on the top end portion of the input shaft portion 26.

The top side supporting portion 27 has a circular column shape that is coaxial with the input shaft portion 26, and is supported such that it can rotate freely on the top wall portion 11a of the frame 11 via a bearing 29 that is fitted onto the outer circumferential surface thereof. A C-clip 27a is mounted on a top end portion of the top side supporting portion 27. As a result of the C-clip 27a and the top end portion of the socket body 24 coming into contact with the frame 11 via flange portions of the respective bearings 28 and 29, the socket member 22 is positioned in the vertical direction relative to the frame 11.

The input rotors 21 are supported on the input shaft portion 26 of the socket member 22 such that they can rotate freely around the axis of rotation of the socket member 22. The input rotors 21 are shaped as circular cylinders through which the input shaft portions 26 can be inserted, and the output gears 18 are formed integrally with an outer circumferential portion of the bottom portion thereof.

Disc-shaped thick washers 31 and 32 are placed respectively on the top and bottom of the input rotors 21. These thick washers 31 and 32 respectively have substantially D-shaped insertion holes 31a and 32a that match the cross-sectional configuration of the input shaft portions 26. By inserting an input shaft portion 26 through the insertion holes 31a and 32a, the respective thick washers 31 and 32 are mounted on the input shaft portion 26 in a state in which they are allowed to make relative movements in the vertical direction relative to the input shaft portion 26, however, any relative rotation thereof around the axis of rotation is restricted.

A plurality of disc-springs 33 and 34 are interposed between the input rotor 21 and the respective thick washers 31 and 32. Specifically, two disc springs 33 whose outer circumferential side is positioned higher than their center side are stacked between the input rotor 21 and the top side thick washer 31. Three disc springs 34 whose outer circumferential side is positioned lower than their center side are stacked between the input rotor 21 and the bottom side thick washer 32.
Note that in the present embodiment the disc springs 33 and 34 are placed above and below the input rotor 21, however, the disc spring is also possible to be placed either above or below the input rotor 21.

A wrench nut 35 is threaded onto the male threaded portion 26b of the input shaft 26. The top side thick washer 31 and the two disc springs 33 are placed between the bottom surface of the wrench nut 35 and the top surface of the input rotor 21. In contrast, the bottom side thick washer 32 and the three disc springs 34 are placed between the top surface of the bottom side supporting portion 25 and the bottom surface of the input rotor 21. Namely, the respective thick washers 31 and 32, the disc springs 33 and 34, and the input rotor 21 that are placed between the bottom surface of the wrench nut 35 and the top surface of the bottom side supporting portion 25 are held by the wrench nut 35 and the bottom side supporting portion 25.

If the wrench nut 35 is tightened so that a predetermined resilient force is generated in the respective disc springs 33 and 34, then the respective thick washers 31 and 32 and the input rotor 21 are engaged by friction via the respective disc springs 33 and 34. As a result, it becomes possible for torque to be transmitted between the input rotor 21 and the socket member 22. Namely, the respective thick washers 31 and 32 and the disc springs 33 and 34 constitute the clutch mechanism 23 that is interposed between the input rotor 21 and the socket member 22.

This type of clutch mechanism 23 adjusts the amount that the wrench nut 35 is tightened on the male threaded portion 26b and changes the resilient force of the disc springs 33 and 34, thereby resulting in the friction engagement (i.e., the clutch capacity) between the input rotor 21 and the socket member 22 being increased or decreased. Namely, when a top limit value is set for the tightening torque that can be transmitted between the input rotor 21 and the socket member 22 and torque that exceeds this top limit value is applied, the clutch mechanism 23 is made to slip and the input rotor 21 and socket member 22 are rotated relatively to each other, resulting in it not being possible to transmit torque between them.

As has been described above, the fastening tool 10 for a fuel cell of the above described example is used to simultaneously fasten a large number of stacked unit cells 2 using a plurality of fastening members 5. This fastening tool 10 for a fuel cell is provided with the socket members 22 that are provided so as to correspond to each fastening member 5 and are engaged such that they can transmit torque to the fastening members 5, the torque transmission mechanism 15 that divides torque that is input from the torque input device in the form of the handle 12 and transmits it to the input rotors 21 that are provided to correspond to each socket member 22, and the clutch mechanisms 23 that are provided respectively between each socket member 22 and input rotor 21. The clutch mechanism 23 is constructed so as to cause the socket members 22 to rotate together with the input rotors 21 when the torque required to tighten the fastening member 5 is equal to or less than a predetermined value, and so as to cause the input rotors 21 to rotate idly relative to the socket members 22 when the torque is larger than a predetermined value.

According to this structure, when a fuel cell 1 is being assembled, after the respective fastening members 5 have been temporarily joined to the stacked unit cells 2, they are simultaneously tightened. As a result, it is possible to maintain a uniform fastening force in each fastening member 5 and apply surface pressure evenly to the unit cells 2.
Because of this, when assembling a fuel cell 1, an operation to fasten stacked unit cells 2 using separate pressing machines or the like is unnecessary, and it is possible to maintain a uniform fastening force in each fastening member 5 and apply surface pressure evenly to the unit cells 2. Accordingly, the effect is obtained that the number of steps needed to assemble the fuel cell 1 can be decreased.

Moreover, even if there are differences in the temporary joining state of the respective fastening members 5 (for example, the amount that each nut 7 has been threaded onto the stud bolts 6), if the torque required to tighten the fastening members 5 reaches a predetermined value, in other words, if the fastening force of the fastening members 5 reaches the predetermined value, then because the clutch mechanism 23 allows the input rotors 21 to rotate idly relative to the socket members 22, the result is that simply by inputting torque until all of the input rotors 21 are rotating idly, any unevenness in the temporary joining state of the respective fastening members 5 is absorbed, and they can be simultaneously and uniformly tightened.
As a result, the effect is obtained that, in combination with the above described operating effects, it is possible to greatly decrease the number of steps required to assemble the fuel cell 1.

Note that this invention is not limited to the above described example. For example, it is also possible to employ an electric motor type or pneumatic type or the like of torque input device instead of using the handle 12. Moreover, the adjustment of the fastening force of the fastening member 5 can be performed not on the nut 7 side, but by tightening the head portion 6a side of the stud bolt 6. Furthermore, the torque transmission mechanism 15 may also be formed by a combination of a chain and sprocket or by a combination of a belt and pulley. Furthermore, it is also possible to employ a structure in which the urging device for the clutch mechanism 23 does not use disc springs but coil springs, however, from the standpoint of it being possible to suppress the entire length in the vertical direction of each torque wrench 20, it is desirable for disc springs to be used.
It is also possible to provide a guide or the like in the frame 11 in order to stabilize the fuel cell 1. For example, by extending the side surfaces of the frame 11 to the socket member side so as to provide a frame-shaped guide, the fuel cell 1 can be fitted in the inner side of this guide. Therefore, the frame 11 can be stabilized and the fuel cell 1 can be fastened.
Moreover, in the present embodiment a fuel cell is used as an object fastened by a fastening tool, however, the fastened object is not limited to a fuel cell.
In addition, the structure in the above described example is only one example and it should be understood that various modifications can be made without departing from the scope of the present invention. Additions, omissions, substitutions, and other modifications can be made without departing from the spirit or scope of the present invention. Accordingly, the invention is not to be considered as limited by the foregoing description and is only limited by the scope of the appended claims.

### INDUSTRIAL APPLICABILITY

According to the present invention, when assembling a fuel cell, an operation to fasten stacked unit cells using separate pressing machines or the like is unnecessary, and it is possible to maintain a uniform fastening force in each fastening member and apply surface pressure evenly to the unit cells. In addition, any unevenness in the temporary joining state of the respective fastening members is absorbed, and they can be simultaneously and uniformly tightened. As a result, it is possible to greatly decrease the number of steps required to assemble a fuel cell.

## Claims

1. A fastening tool for a fuel cell comprising:
a plurality of socket members that are engaged so as to be able to transmit torque individually to a plurality of fastening members for simultaneously fastening a large number of stacked unit cells;
rotors that are provided individually on each of the socket members;
a torque input device that inputs torque for rotating the respective rotors;
a torque transmission mechanism that divides torque that is input from the torque input device and transmits it to the respective rotors so as to cause each rotor to rotate uniformly; and
clutch mechanisms that are individually provided between the respective socket members and rotors and cause the socket members to rotate together with the rotors when a tightening torque that causes the rotors to rotate is equal to or less than a predetermined value, and cause the rotors to rotate idly relative to the socket members when the tightening torque is greater than the predetermined value.

2. The fastening tool for a fuel cell according to claim 1, wherein:
the clutch mechanisms comprise:
washers that are placed at one end in an axial rotation direction of the rotors and rotate integrally with the rotors; and
disc springs that are placed between the rotors and the washers and are compressed.

3. The fastening tool for a fuel cell according to claim 2, further comprising nuts that change a resilient force of the disc springs.

4. The fastening tool for a fuel cell according to claim 1, further comprising a box-shaped frame that supports the socket members and the torque input device so as to rotate freely, and that houses the clutch mechanism.
